# EUROPEAN PATENT APPLICATION

(11) **EP 4 571 734 A1**
(43) Date of publication of application: **18.06.2025**
(21) Application number: 23890331.4
(22) Date of filing: 25.08.2023
(51) Int. Cl.: G10L 15/22

(54) **METHOD FOR WAKING UP APPLICATION PROGRAM, AND ELECTRONIC DEVICE**

(30) Priority: 16.11.2022 CN 202211438531
(71) Applicant: Honor Device Co., Ltd., Shenzhen, Guangdong 518040 (CN)
(72) Inventor: DAI, Can, Shenzhen, Guangdong 518040 (CN); ZHANG, Mian, Shenzhen, Guangdong 518040 (CN); LIANG, Hengzhou, Shenzhen, Guangdong 518040 (CN); CHENG, Quan, Shenzhen, Guangdong 518040 (CN)
(74) Representative: Thun, Clemens
(86) International application number: PCT/CN2023/114978
(87) International publication number: WO 2024/103893

(57) **Abstract**

This application provides a method for waking up an application, and an electronic device. The method includes: A breath wake-up processing apparatus sends voice data in first data when detecting that the obtained first data is used for indicating to wake up a first application through breath. A breath wake-up software module stores the voice data, starts the first application, and controls the breath wake-up processing apparatus to stop detecting breath wake-up of the first application. The first application sends a first notification when successfully calling the breath wake-up software module. The breath wake-up software module sends the voice data to the first application. The first application performs voice recognition on the voice data. The first application sends a second notification when determining, based on the voice data, that the voice recognition ends. The breath wake-up software module controls, in response to the second notification, the breath wake-up processing apparatus to start next breath wake-up. Therefore, wake-up for an application is implemented, and preparation is also made for the wake-up for the application.

## Description

This application claims priority to Chinese Patent Application No. 202211438531.X, filed with the China National Intellectual Property Administration on November 16, 2022 and entitled "METHOD FOR WAKING UP APPLICATION, AND ELECTRONIC DEVICE", which is incorporated herein by reference in its entirety.

### TECHNICAL FIELD

This application relates to the field of terminal technologies, and in particular, to a method for waking up an application, and an electronic device.

### BACKGROUND

With the development of voice recognition technologies, a voice assistant (such as YOYO, Xiaoyi, or Siri) is added to a plurality of electronic devices to help a user complete a human-computer interaction process with the electronic devices. Generally, the voice assistant is in a sleep state, and the user may wake up the voice assistant when wanting to use the voice assistant.

Currently, two main technologies for waking up the voice assistant include a button wake-up technology and a keyword wake-up technology. In the button wake-up technology, the voice assistant is woken up by receiving a trigger operation by the user on a button (such as a power button). In the keyword wake-up technology, the voice assistant is woken up by receiving a specific wake-up word (for example, "Hello, YOYO", "Xiaoyi, Xiaoyi", or "Hi Siri") inputted by the user through a voice.

However, in the foregoing implementations, waking up the voice assistant is cumbersome, and user experience is low.

### SUMMARY

This application provides a method for waking up an application, and an electronic device, to implement current wake-up of an application, and also prepare for next wake-up of the application, thereby improving user experience.

According to a first aspect, this application provides a method for waking up an application, applied to an electronic device. The electronic device includes a first application, a breath wake-up software module, and a breath wake-up processing apparatus.

The method includes:
The breath wake-up processing apparatus obtains first data.

The breath wake-up processing apparatus sends voice data in the first data to the breath wake-up software module when detecting that the first data is used for indicating to wake up the first application through breath.

The breath wake-up software module stores the voice data, starts the first application, and controls the breath wake-up processing apparatus to stop detecting breath wake-up of the first application and continue to obtain voice data.

The first application sends a first notification to the breath wake-up software module when successfully calling the breath wake-up software module after being started.

The breath wake-up software module sends the voice data to the first application in response to the first notification.

The first application performs voice recognition on the voice data.

The first application sends a second notification to the breath wake-up software module when determining, based on the voice data, that the voice recognition ends.

The breath wake-up software module controls, in response to the second notification, the breath wake-up processing apparatus to start detecting next breath wake-up of the first application.

In the foregoing method, when the breath wake-up processing apparatus detects that the first data is used for indicating to wake up the first application through breath, the breath wake-up software module may start the first application. Using a breath wake-up technology to wake up the first application ensures convenience and timeliness of starting the first application.

In addition, the breath wake-up software module may control, when starting the first application, the breath wake-up processing apparatus to stop detecting the breath wake-up of the first application, so as to prevent current voice recognition from being interrupted and ensure a quality of the current voice recognition by the first application.

In addition, the breath wake-up software module may control, when the first application determines that the voice recognition ends, the breath wake-up processing apparatus to start detecting the next breath wake-up of the first application, facilitating restoring a breath wake-up function of the first application, to prepare for the next wake-up of the application.

It may be learned that, in this application, the current wake-up of the application is implement, and the next wake-up of the application is also prepared, thereby improving user experience.

With reference to the first aspect, in some implementations of the first aspect, the method further includes:

The breath wake-up software module controls, when not receiving the first notification or the second notification after preset duration, the breath wake-up processing apparatus to start detecting the next breath wake-up of the first application.

In the foregoing method, when the breath wake-up software module does not receive the first notification or the second notification after the preset duration, it may be determined that the first application is not currently started, or the first application fails to call the breath wake-up software module, consequently, the breath wake-up software module cannot receive the first notification or the second notification.

In this case, the breath wake-up software module may control the breath wake-up processing apparatus to start detecting the next breath wake-up of the first application, facilitating restoring a breath wake-up function of a voice assistant application.

With reference to the first aspect, in some implementations of the first aspect, the method further includes:
displaying a first user interface after the first application program is started; and
displaying, by the first application, a voice recognition result on the first user interface.

The voice recognition result may be displayed on the first user interface, so that a user can understand the voice recognition result in time, thereby improving user experience.

With reference to the first aspect, in some implementations of the first aspect, the breath wake-up software module includes a first software module and a second software module. The voice data is stored in the second software module.

That the first application sends a first notification to the breath wake-up software module when successfully calling the breath wake-up software module after being started includes:

The first application sends the first notification to the first software module when successfully calling the first software module after being started.

That the breath wake-up software module sends the voice data to the first application in response to the first notification includes:

The first software module retrieves the voice data from the second software module in response to the first notification, and sends the voice data to the first application.

The first software module may be an audio policy service (audio policy service).

The second software module may be a sound trigger-hal (sound trigger-hal).

In the foregoing method, when the first application successfully calls the first software module, the first software module may retrieve the voice data from the second software module and send the voice data to the first application, so that the first application can receive the voice data in time.

With reference to the first aspect, in some implementations of the first aspect, the method further includes:

The first software module sends a third notification to the second software module in response to the first notification.

The second software module controls, in response to the third notification, the breath wake-up processing apparatus to stop detecting the breath wake-up of the first application and continue to obtain voice data.

In the foregoing method, the second software module controls, in response to the third notification, the breath wake-up processing apparatus to detect the breath wake-up of the first application and continue to obtain voice data. Controlling the breath wake-up processing apparatus to stop detecting the breath wake-up of the first application can prevent the current voice recognition from being interrupted.

The quality of the voice recognition by the first application is ensured again. That the breath wake-up processing apparatus stops detecting the breath wake-up of the first application can also save power for the electronic device.

With reference to the first aspect, in some implementations of the first aspect, that the breath wake-up software module controls, in response to the second notification, the breath wake-up processing apparatus to start detecting next breath wake-up of the first application includes:

The first software module sends a fourth notification to the second software module in response to the second notification.

The second software module controls, in response to the fourth notification, the breath wake-up processing apparatus to start detecting the next breath wake-up of the first application.

In the foregoing method, the breath wake-up software module may control, when starting the first application, the breath wake-up processing apparatus to stop detecting the breath wake-up of the first application, and the second software module controls, in response to the third notification, the breath wake-up processing apparatus to stop detecting the breath wake-up of the first application.

It may be learned that the breath wake-up processing apparatus is currently controlled to stop detecting the breath wake-up of the first application. In this case, the second software module controls, in response to the fourth notification, the breath wake-up processing apparatus to start detecting the next breath wake-up of the first application, facilitating restoring the breath wake-up function of the first application.

With reference to the first aspect, in some implementations of the first aspect, the breath wake-up software module further includes a third software module and a fourth software module.

The breath wake-up software module stores the voice data, starts the first application, and controls the breath wake-up processing apparatus to stop detecting breath wake-up of the first application and continue to obtain voice data includes:

The second software module stores the voice data, and sends a wake-up event to the third software module.

The third software module sends the wake-up event to the fourth software module in response to the wake-up event, and sends a fifth notification to the second software module.

The fourth software module starts the first application in response to the wake-up event.

The second software module controls, in response to the fifth notification, the breath wake-up processing apparatus to stop detecting the breath wake-up of the first application and continue to obtain voice data.

The third software module may be a sound trigger module (sound trigger module).

The fourth software module may be a sound trigger (sound trigger).

In the foregoing method, the fourth software module may start the first application in response to the wake-up event, to ensure timeliness of starting the first application.

In addition, because the wake-up event is triggered, the breath wake-up processing apparatus is controlled to stop detecting the breath wake-up of the first application, so as to prevent the current voice recognition from being interrupted and ensure the quality of the current voice recognition by the first application.

With reference to the first aspect, in some implementations of the first aspect, the method further includes:

The third software module sets expiration time in response to the wake-up event, and starts timing based on the expiration time.

The third software module sends a sixth notification to the second software module when determining that the first notification or the second notification is not received when timing of the expiration time ends.

The second software module controls, in response to the sixth notification, the breath wake-up processing apparatus to start detecting the next breath wake-up of the first application.

The third software module disables the timing of the expiration time in response to the first notification.

In the foregoing method, a timer may set time to determine whether the first notification or the second notification is received, so that when the first notification or the second notification is not received, the second software module controls the breath wake-up processing apparatus to start detecting the next breath wake-up of the first application to restore the breath wake-up function.

With reference to the first aspect, in some implementations of first aspect, that the first application sends a second notification to the breath wake-up software module when determining, based on the voice data, that the voice recognition ends includes:

The first application determines, in response to an operation for indicating to end the voice recognition, that the voice recognition ends.

Alternatively, the first application determines, when determining that a voice text corresponding to the voice data satisfies a preset rule, that the voice recognition ends.

The first application sends the second notification to the first software module when determining that the voice recognition ends.

The first application may determine, in two manners, whether the voice recognition ends. One is to determine, when an operation of ending the voice recognition indicated by the user, that the voice recognition ends. The other is to determine, when it is determined that the voice text corresponding to the voice data is a complete word or sentence, that the voice recognition ends.

In addition, the first application sends the second notification to the first software module when determining that the voice recognition ends, facilitating notifying the third software module. The third software module may notify the second software module to control the breath wake-up processing apparatus to start detecting the next breath wake-up of the first application.

With reference to the first aspect, in some implementations of the first aspect, the breath wake-up processing apparatus includes an inertial detection sensor, a sound acquisition sensor, and an audio digital signal processor.

The first data includes the voice data and gesture data. That the breath wake-up processing apparatus obtains first data includes:

The inertial detection sensor acquires the gesture data.

The inertial detection sensor sends the gesture data to the audio digital signal processor.

The sound acquisition sensor acquires the voice data.

The sound acquisition sensor sends the voice data to the audio digital signal processor.

That the breath wake-up processing apparatus sends voice data in the first data to the breath wake-up software module when detecting that the first data is used for indicating to wake up the first application through breath includes:

The breath wake-up processing apparatus sends the voice data to the breath wake-up software module when detecting that a similarity between the gesture data and preset wake-up gesture data is greater than a first threshold, and a similarity between the voice data and preset wake-up breath data is greater than a second threshold.

In the foregoing method, the inertial detection sensor may acquire the gesture data, and the sound acquisition sensor may acquire the voice data.

The breath wake-up processing apparatus may detect the gesture data acquired by the inertial detection sensor and the voice data acquired by the sound acquisition sensor.

According to a second aspect, this application provides an apparatus for waking up an application. The apparatus for triggering an electronic device to perform a function is configured to perform the method for waking up an application according to any one of the first aspect or possible designs in the first aspect.

According to a third aspect, this application provides an electronic device, including a processor. When the processor executes computer code or instructions in a memory, the electronic device is enabled to perform the method for waking up an application according to any one of the first aspect and possible designs in the first aspect.

According to a fourth aspect, this application provides an electronic device, including one or more processors, a memory, and one or more computer programs. The one or more computer programs are stored in the memory. When the computer program is executed by the one or more processors, the electronic device is enabled to perform the method for waking up an application according to any one of the first aspect or possible designs of the first aspect.

According to a fifth aspect, this application provides a chip system. The chip system includes a processor, and is configured to invoke a computer program from a memory and run the computer program, to enable an electronic device having the chip system installed to perform the method for waking up an application according to any one of the first aspect or possible designs of the first aspect.

According to a sixth aspect, this application provides a computer-readable storage medium, including a computer program. When the computer program is run on an electronic device, the electronic device is enabled to perform the method for waking up an application according to any one of the first aspect or the possible designs of the first aspect.

According to a seventh aspect, this application provides a computer program product. When the computer program product runs on a computer, the computer is enabled to perform the method for waking up an application according to any one of the first aspect or the possible designs of the first aspect.

It may be understood that, for beneficial effects of the second aspect to the seventh aspect, reference may be made to the related descriptions in the first aspect. Details are not described herein again.

### BRIEF DESCRIPTION OF DRAWINGS

To describe the technical solutions of embodiments of this application more clearly, the following briefly introduces the accompanying drawings required for describing embodiments or conventional technologies. Apparently, the accompanying drawings in the following description show only some embodiments of this application, and a person of ordinary skill in the art may still derive other drawings from these accompanying drawings without creative efforts.
FIG. 1 is a schematic diagram of a scenario of a method for waking up an application according to an embodiment of this application;
FIG. 2 is a schematic diagram of a structure of an electronic device according to an embodiment of this application;
FIG. 3 is a schematic diagram of a structure of an electronic device according to an embodiment of this application;
FIG. 4 is a schematic diagram of a structure of a breath wake-up software module according to an embodiment of this application;
FIG. 5A to FIG. 5C are a flowchart of a method for waking up an application according to an embodiment of this application;
FIG. 6 is a flowchart of a method for waking up an application according to an embodiment of this application; and
FIG. 7A to 7E are schematic diagrams of a human-machine interaction interface according to an embodiment of this application.

### DESCRIPTION OF EMBODIMENTS

Technical solutions in embodiments of this application are described below with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and indicates that three relationships may exist. For example, A and/or B may represent the following three cases: Only A exists, both A and B exist, and only B exists. In addition, in the descriptions of embodiments of this application, "a plurality of" represents two or more.

The terms "first", "second" and "third" described below are merely intended for an objective of description, and shall not be understood as an indication or implication of relative importance or implicit indication of the quantity of indicated technical features. Therefore, a feature limited by "first", "second", or "third" may explicitly or implicitly include one or more of the features.

It should be understood that, for waking up a voice assistant application (application, APP) through a keyword:

An electronic device sends voice data to a low-power audio digital signal processor (audio digital signal processing, ADSP) after acquiring the voice data by using a sound acquisition sensor (for example, a microphone). The ADSP detects the voice data by using a voice wake-up model.

When detecting that there is wake-up word data that matches a preset wake-up word in the voice data, the ADSP sends the voice data to a wake-up software module. The process may be referred to as first-level wake-up.

The wake-up software module performs text verification and voiceprint verification on the voice data to determine whether the voice data matches a generated voiceprint model. When the voice data matches the voiceprint model, the wake-up software module may control the voice assistant application to start. The process may be referred to as second-level wake-up.

For waking up the voice assistant application through the keyword, there is a specific keyword. Each time the voice assistant application is woken up, the voice wake-up model may stop running once and start running once.

For waking up the voice assistant application through breath:
After acquiring voice data by using a sound acquisition sensor and gesture data by using an inertial detection sensor, an electronic device sends the voice data and the gesture data to a low-power audio digital signal processor (audio digital signal processing, ADSP). The ADSP detects the voice data and the gesture data by using a breath wake-up model.

The breath wake-up model is configured to detect the acquired voice data and gesture data, and determine whether a similarity between the voice data and preset wake-up breath data is greater than a first threshold, and whether a similarity between the gesture data and preset wake-up gesture data is greater than a second threshold.

In addition, an original wake-up model may be trained using sample wake-up breath data and sample wake-up gesture data to obtain the breath wake-up model.

When detecting that the similarity between the voice data and the preset wake-up breath data is greater than the first threshold, and the similarity between the gesture data and the preset wake-up gesture data is greater than the second threshold, the ADSP sends the voice data to a breath wake-up software module. The breath wake-up software module controls the voice assistant application to start.

It may be learned that, for waking up the voice assistant application through breath, there is only a first-level wake-up process.

This application may provide a method for waking up an application, an apparatus for waking up an application, an electronic device, a chip system, a computer-readable storage medium, and a computer program product. When detecting that the acquired voice data matches the preset wake-up breath data and the gesture data matches the preset wake-up gesture data, the ADSP may send the detected voice data to the breath wake-up software module. The breath wake-up software module stores the voice data, controls the voice assistant application to start, and controls the ADSP to stop detecting acquired data. After the voice assistant application is started and when the breath wake-up software module is successfully called, the breath wake-up software module may send the voice data to the control voice assistant application, so that the control voice assistant application performs voice recognition on the voice data. In addition, the voice assistant application may notify the breath wake-up software module when determining, based on the voice data, that the voice recognition ends. The breath wake-up software module may control the ADSP to restart detecting next acquired data.

Therefore, current wake-up of an application is implemented, interaction of a user with the electronic device through a voice assistant is ensured, to prepare for next wake-up of the application, thereby improving user experience.

The method for waking up an application provided in this application is applied to an electronic device. The electronic device may be an electronic device having display screen hardware and corresponding software support.

For example, the electronic device may be a mobile phone, a tablet computer, a wearable device, a vehicle-mounted device, a laptop computer, an ultra-mobile personal computer (ultra-mobile personal computer, UMPC), a netbook, a personal digital assistant (personal digital assistant, PDA), a household device, or the like. A specific type of the electronic device is not specifically limited in this application.

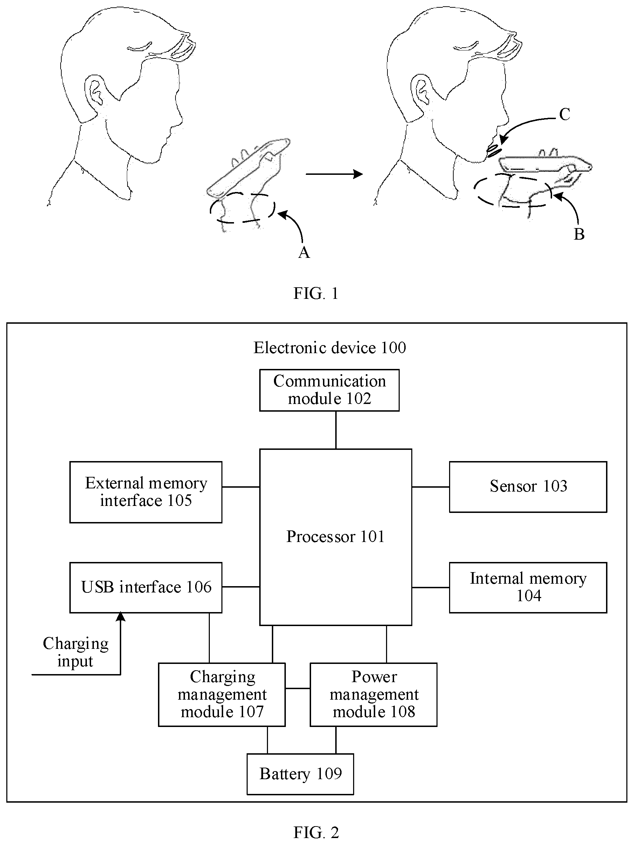

FIG. 1 is a schematic diagram of a scenario of a method for waking up an application according to an embodiment of this application.

As shown in FIG. 1, a user may raise an electronic device, place a bottom of the electronic device close to a mouth, and speak into a microphone.

After acquiring corresponding voice data by using the microphone when the user speaks and corresponding gesture data by using an inertial detection sensor when the user raises the electronic device, the electronic device sends the corresponding voice data and the corresponding gesture data to a low-power ADSP. The ADSP detects the voice data and the gesture data by using a breath wake-up model. When detecting that a similarity between the voice data and preset wake-up breath data is greater than a first threshold, and a similarity between the gesture data and preset wake-up gesture data is greater than a second threshold, the ADSP sends the voice data to a breath wake-up software module. The breath wake-up software module controls a voice assistant to start.

A distance between the electronic device and the mouth of the user may be maintained at 0 to 5 cm, so that the microphone of the electronic device precisely acquires the voice data of the user.

In addition, the gesture data may be wrist-raising gesture data.

It may be learned that, from a gesture state indicated by frame A in the left figure to a gesture state indicated by frame B in the right figure in FIG. 1, the user may raise the electronic device by raising the wrist, and the inertial detection sensor may acquire gesture data of wrist-raising.

It may be learned from the right figure in FIG. 1, after raising the electronic device by raising the wrist, the user puts the mouth close to the microphone of the electronic device to speak, and may produce breath indicated by part C. The microphone can acquire the breath and voice data corresponding to the breath.

It should be understood that the above is an example of describing the scenario. The scenario in this application is not limited.

For ease of description, an example in which an electronic device 100 is a mobile phone is used in FIG. 2.

As shown in FIG. 2, in some embodiments, the electronic device 100 may include a processor 101, a communication module 102, and the like.

The processor 101 may include one or more processing units. For example, the processor 101 may include an application processor (application processor, AP), a modem processor, a graphics processing unit, an image signal processor (image signal processor, ISP), a controller, a memory, a video stream codec, a digital signal processor (digital signal processor, DSP), a baseband processor, a neural-network processing unit (neural-network processing unit, NPU), and/or the like. Different processing units may be independent components, or may be integrated into one or more processors 101.

The controller may be a nerve center and a command center of the electronic device 100. The controller may generate an operation control signal based on instruction operation code and a timing signal, to complete control on instruction fetching and instruction execution.

A memory may be further disposed in the processor 101 and is configured to store instructions and data.

In some embodiments, the memory in the processor 101 is a cache. The memory may store instructions or data recently used or cyclically used by the processor 101. If the processor 101 needs to use the instructions or the data again, the processor may directly invoke the instructions or the data from the memory. This avoids repeated accessing and reduces waiting time of the processor 101, thereby improving system efficiency.

In some embodiments, the processor 101 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The communication module 102 may include an antenna 1, an antenna 2, a mobile communication module, and/or a wireless communication module.

As shown in FIG. 2, in some embodiments, the electronic device 100 may further include an external memory interface 105, an internal memory 104, a USB interface 106, a charging management module 107, a power management module 108, a battery 109, a sensor module 103, and the like.

The NPU is a neural-network (neural-network, NN) computing processor, and quickly processes input information by using a biological neural network structure such as a mode of transmission between human-brain nerve cells, and may further constantly perform self-learning. The NPU may be used to implement an application such as intelligent cognition of the electronic device 100, for example, image recognition, facial recognition, voice recognition, and text understanding.

The charging management module 107 is configured to receive charging input from a charger. The charger may be a wireless charger or a wired charger.

In some embodiments of wired charging, the charging management module 107 may receive charging input of the wired charger by using the USB interface 106.

In some embodiments of wireless charging, the charging management module 107 may receive wireless charging input by using a wireless charging coil of the electronic device 100. When charging the battery 109, the charging management module 107 may further supply power to the electronic device 100 by using the power management module 108.

The power management module 108 is configured to be connected to the battery 109, the charging management module 107, and the processor 101. The power management module 108 receives input from the battery 109 and/or the charging management module 107, to supply power to the processor 101, the internal memory 104, an external memory, the communication module 102, and the like. The power management module 108 may be further configured to monitor parameters, such as a battery capacity, a quantity of battery cycles, and a battery health state (electric leakage and impedance).

In some other embodiments, the power management module 108 may alternatively be disposed in the processor 101.

In some other embodiments, the power management module 108 and the charging management module 107 may alternatively be disposed in a same device.

The external memory interface 105 may be configured to be connected to an external storage card such as a micro SD card, to expand a storage capability of the electronic device 100. The external storage card communicates with the processor 101 by using the external memory interface 105, to implement a data storage function. For example, files such as music and a video stream are stored in the external memory card.

The internal memory 104 may be configured to store computer-executable program code, and the executable program code includes instructions. The processor 101 runs the instructions stored in the internal memory 104, to perform various functional applications and data processing of the electronic device 100. The internal memory 104 may include a program storage area and a data storage area. The program storage area may store an operating system, an application required by at least one function (such as a sound playback function and an image display function), and the like. The data storage area may store data (such as audio data and a phone book) and the like created when the electronic device 100 is used. In addition, the internal memory 104 may include a high-speed random access memory, and may further include a non-volatile memory, for example, at least one magnetic disk storage device, a flash memory device, or a universal flash storage (universal flash storage, UFS).

The sensor module 103 of the electronic device 100 may include a component such as an image sensor, a touch sensor, a pressure sensor, a gyroscope sensor, a barometric pressure sensor, a magnetic sensor, an acceleration sensor, a distance sensor, an optical proximity sensor, an ambient light sensor, a fingerprint sensor, a temperature sensor, and a bone conduction sensor, to implement sensing and/or acquisition functions of different signals.

Optionally, the electronic device 100 may further include a peripheral device, such as a mouse, a button, an indicator light, a keyboard, a speaker, or a microphone.

The button includes a power-on button, a volume button, and the like. The button may be a mechanical button or a touch button. The electronic device 100 may receive button input, and generate button signal input related to user settings and function control of the electronic device 100.

The indicator may be an indicator light, may be configured to indicate a charging state and a battery change, and may be further configured to indicate a message, a missed call, a notification, and the like.

It may be understood that the structure shown in this embodiment constitutes no specific limitation on the electronic device 100.

In some other embodiments, the electronic device 100 may include more or fewer components than those shown in the figure, some components may be combined, some components may be split, or different component arrangements may be used. The components in the figure may be implemented by hardware, software, or a combination of software and hardware.

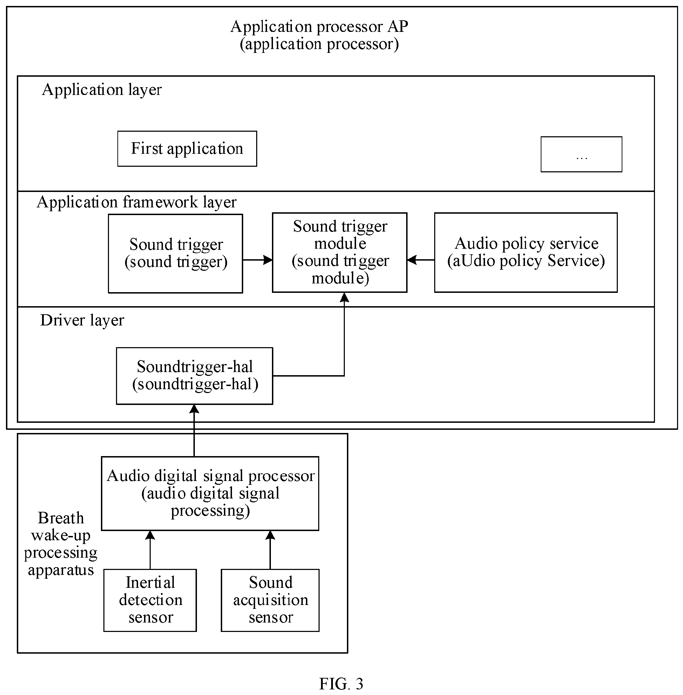

FIG. 3 is a schematic diagram of an electronic device according to an embodiment of this application. When the method for waking up an application provided in embodiments of this application is applied to the electronic device 100 shown in FIG. 2, software in the electronic device 100 may be divided into an application layer 201, an application framework layer 202, and a driver layer 203 as shown in FIG. 3.

As shown in FIG. 3, a plurality of applications may be installed in the application layer 201, and may include a first application and the like. For example, the first application may be a voice assistant application (application, APP).

The application framework layer 202 may include a sound trigger (sound trigger), a sound trigger module (sound trigger module), an audio policy service (audio policy service), and the like. In addition, the application framework layer 202 may further include an audio service (audio service), a sound trigger service (sound trigger service), an audio flinger (audio flinger), and the like.

The audio trigger module is configured to control the voice assistant application of the application layer 201 to start. The sound trigger module is configured to send a wake-up event to the audio trigger module, and send a notification, to an audio driver of the driver layer 203, for indicating stopping running or starting running of a breath wake-up model. The audio policy service module is configured to establish a voice recognition channel with the voice assistant application of the application layer 201.

In addition, the audio service module device is configured to send a startup notification to the audio trigger module in response to a startup notification sent by the voice assistant application of the application layer 201. The audio trigger module is further configured to send a startup notification to the audio trigger service module device in response to the startup notification sent by the audio service module device. The audio trigger service module is configured to send a startup notification to the sound trigger module in response to the startup notification sent by the audio trigger module. The sound trigger module is further configured to send, to the audio policy service module in response to the startup notification sent by the audio trigger module, a notification of starting running the breath wake-up model. The audio policy service module initiates, in response to the notification of starting running the breath wake-up model, a notification of running the breath wake-up model. The audio flinger module is configured to send, in response to a notification of loading the breath wake-up model sent by the audio policy service module, a notification of loading the breath wake-up model to the audio driver of the driver layer 203. The audio driver of the driver layer 203 is configured to send, to an audio digital signal processor of a breath wake-up processing apparatus, a notification for indicating to start running the breath wake-up model.

The driver layer 203 is a layer between hardware and software. The driver layer 203 may include the sound trigger-hal (sound trigger-hal) and the like.

A plurality of drivers (drivers) for driving hardware may be installed in the driver layer 203.

It should be noted that the application layer 201, the application framework layer 202, and the driver layer 203 may further include other content. This is not specifically limited here.

In addition, FIG. 3 further shows a breath wake-up processing apparatus connected to the driver layer 203.

For example, as shown in FIG. 3, the breath wake-up processing apparatus may include at least an inertial detection sensor, a sound acquisition sensor, an audio digital signal processor, and the like.

The inertial detection sensor is configured to acquire gesture data. The sound acquisition sensor is configured to acquire voice data. The audio signal processor is configured to obtain the gesture data acquired by the inertial detection sensor and the voice data acquired by the sound acquisition sensor, and detect the gesture data and the voice data.

The application framework layer 202 may include a breath wake-up software module.

The breath wake-up software module may include an audio framework and a sound trigger-hal (sound trigger-hal).

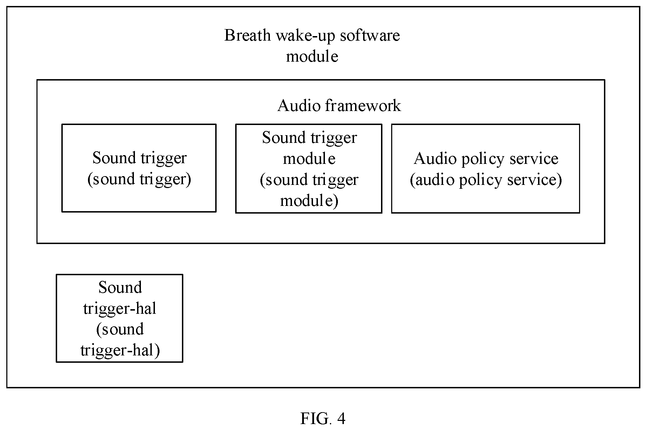

As shown in FIG. 4, the audio framework may include a sound trigger (sound trigger), a sound trigger module (sound trigger module), and an audio policy service (audio policy service).

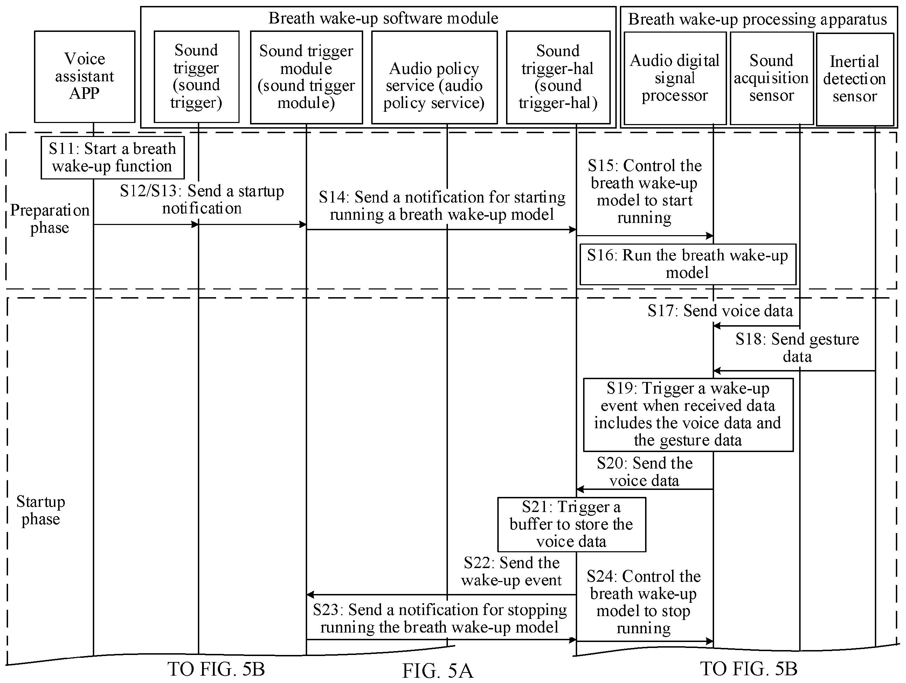

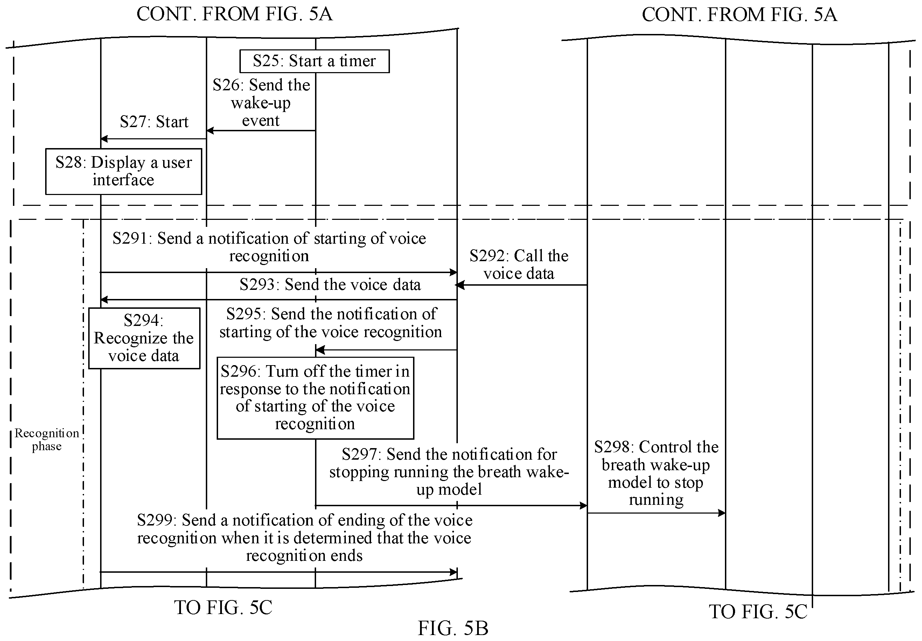

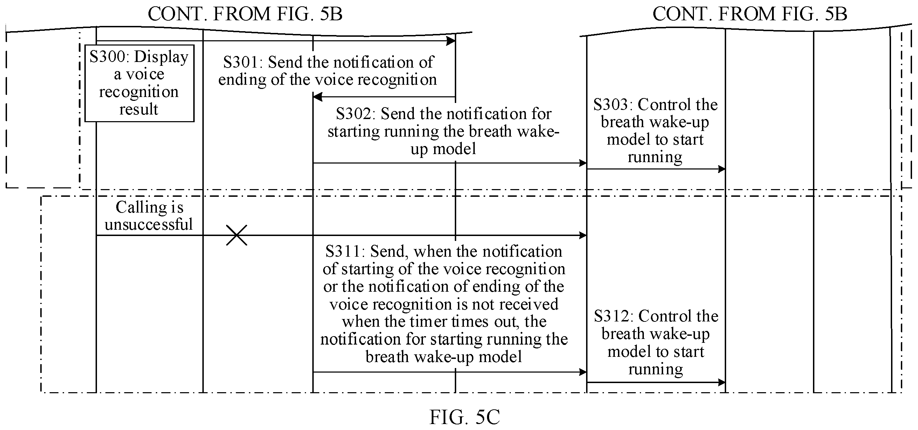

As shown in FIG. 5A to FIG. 5C, a breath wake-up processing apparatus may include an audio digital signal processor (audio digital signal processing, ADSP), a sound acquisition sensor, and an inertial detection sensor. Both the sound acquisition sensor and the inertial detection sensor are connected to the audio digital signal processor.

The following describes a specific implementation process of a method for waking up an application in this application in detail with reference to FIG. 5A to FIG. 5C.

FIG. 5A to FIG. 5C are a flowchart of a method for waking up an application according to an embodiment of this application.

As shown in FIG. 5A to FIG. 5C, the method may be divided into three different phases, namely, a preparation phase, a startup phase, and a recognition phase.

The preparation phase may be understood as a phase in which a breath wake-up function of a voice assistant application is enabled to enable a breath wake-up model in the audio digital signal processor to be in a continuous running phase.

The startup phase may be understood as a phase in which the voice assistant application is controlled to start when voice data and gesture data for waking up the voice assistant application are obtained.

The recognition phase may be understood as a phase in which the voice assistant application performs voice recognition on the voice data and determines, based on a state of the voice recognition, whether to start running or stop running the breath wake-up model.

As shown in FIG. 5A to FIG. 5C, the method for waking up an application in this application may include:

### [Preparation phase]

S11: Enable the breath wake-up function of the voice assistant application.

An electronic device may display a manner for waking up the voice assistant application on a settings interface. A specific implementation of the settings interface is not limited in this application.

In some embodiments, the settings interface may include a breath wake-up control. The breath wake-up control is configured to trigger to start the breath wake-up function of the voice assistant application.

A display position, a display style, a display size, and another parameter of the breath wake-up control are not limited in this application.

In this case, after receiving an operation on the breath wake-up control, the electronic device may enable the breath wake-up function of the voice assistant application.

S12: The voice assistant application sends a notification for indicating to start an audio trigger module to the audio trigger module.

After enabling the breath wake-up function, the voice assistant application may send a startup notification to the audio trigger module, and the audio trigger module may be started in response to the startup notification.

Therefore, after being started, the audio trigger module can receive and send data.

S13: The audio trigger module is started in response to the notification for indicating to start the audio trigger module, and sends a notification for indicating to start a sound trigger module to the sound trigger module.

After being started, the audio trigger module may send a startup notification to the sound trigger module, and the sound trigger module may be started in response to the startup notification.

Therefore, after being started, the sound trigger module can receive and send data.

S14: The sound trigger module is started in response to the notification for indicating to start the sound trigger module, and sends a notification for indicating to start running the breath wake-up model to an audio driver.

S15: The audio driver controls, in response to the notification for indicating to start running the breath wake-up model, the breath wake-up model in the audio digital signal processor to start running.

After being started, the sound trigger module may send the notification for indicating to start running the breath wake-up model to the audio driver.

After receiving the notification for indicating to start running the breath wake-up model, the audio driver may control the breath wake-up model in the audio digital signal processor to start running.

In this case, data is prepared for the audio digital signal processor to run the breath wake-up module.

S16: The audio digital signal processor runs the breath wake-up model in response to the notification for indicating to start running the breath wake-up model.

It should be understood that the audio digital signal processor is a low-power digital signal processor. After the voice assistant application enables the breath wake-up function, the breath wake-up model may be in a continuously running state on the audio digital signal processor, facilitating real-time detection on received voice data and gesture data.

During running of the breath wake-up model, the breath wake-up model may continuously detect the received data to determine whether the received data is data used for waking up the voice assistant application.

The data for waking up the voice assistant application is used for indicating that a similarity between the acquired voice data and preset wake-up breath data is greater than a first threshold, and a similarity between the gesture data and preset wake-up gesture data is greater than a second threshold.

In conclusion, the electronic device may enable the breath wake-up function of the voice assistant application after receiving an operation performed on the breath wake-up control and indicated by a user, so that the user can wake up a voice assistant in a manner of breath wake-up, to ensure convenience of waking up the voice assistant application and improve user experience.

In addition, after the breath wake-up function of the voice assistant application is enabled, the breath wake-up model may be in the continuously running state on the audio digital signal processor, and detect the received data in real time to determine whether the received data is the data used for waking up the voice assistant application, facilitating waking up the voice assistant application in time when the received data is the data used for waking up the voice assistant application.

### [Startup phase]

S17: The sound acquisition sensor sends the voice data to the audio digital signal processor.

The sound acquisition sensor may acquire the voice data in real time, and after acquiring the voice data, the voice data may be sent to the audio digital signal processor.

In some embodiments, the sound acquisition sensor is a microphone (microphone, MIC).

S18: The inertial detection sensor sends the gesture data to the audio digital signal processor.

The inertial detection sensor may acquire the gesture data in real time, and may send the gesture data to the audio digital signal processor after acquiring the gesture data.

S19: The audio digital signal processor triggers a wake-up event when detecting that the received data is used for indicating to wake up the voice assistant application.

Based on the descriptions of S16, it may be determined that the breath wake-up model in the audio digital signal processor is in the continuously running state. To be specific, there are three situations.

The audio digital signal processor only receives the voice data sent by the sound acquisition sensor. The breath wake-up model in the audio digital signal processor detects the voice data when receiving the voice data sent by the sound acquisition sensor.

The audio digital signal processor only receives the data sent by the inertial detection sensor. The breath wake-up model in the audio digital signal processor detects the gesture data when receiving the gesture data sent by the inertial detection sensor.

The audio digital signal processor simultaneously receives the gesture data sent by the inertial detection sensor and the voice data sent by the sound acquisition sensor. The breath wake-up model in the audio digital signal processor may detect the received voice data and gesture data when receiving the voice data sent by the sound acquisition sensor and the gesture data sent by the inertial detection sensor.

When it is determined that the similarity between the voice data and the preset wake-up breath data is greater than the first threshold, and the similarity between the gesture data and the preset wake-up gesture data is greater than the second threshold, the audio digital signal processor may determine that the voice data and the gesture data are the data for waking up the voice assistant application. In this case, the audio digital signal processor may trigger the wake-up event.

In some embodiments, the gesture data is gesture data of wrist-raising.

It is assumed that the gesture data is the gesture data of wrist-raising, the electronic device is a mobile phone, and the sound acquisition sensor is a microphone.

With reference to FIG. 1, when the user raises the mobile phone and puts the microphone of the mobile phone close to a mouth to speak, the microphone may acquire voice data corresponding to words of the user and send the voice data to the audio digital signal processor. The inertial detection sensor may acquire, when the user raises the mobile phone, gesture data corresponding to raising a wrist, and send the gesture data to the audio digital signal processor.

After receiving the voice data and the gesture data, the audio digital signal processor detects the voice data and the gesture data by using the breath wake-up model. When it is determined that the similarity between the voice data and the preset wake-up breath data is greater than the first threshold, and the similarity between the gesture data and the preset wake-up gesture data is greater than the second threshold, the audio digital signal processor may trigger the wake-up event.

S20: The audio digital signal processor sends the voice data to the audio driver.

After triggering the wake-up event, the audio digital signal processor may send the acquired voice data to the audio driver.

In this case, the audio driver may start storing the voice data, so that data is prepared for the voice assistant application to obtain the voice data.

S21: The audio driver triggers a buffer to store the voice data.

After receiving the voice data, the audio driver may trigger the buffer (buffer) of the audio driver to store the voice data. The data may be prepared for the voice assistant application to obtain the voice data.

S22: The audio driver sends the wake-up event to the sound trigger module.

After receiving the voice data, the audio driver may send the wake-up event to the sound trigger module, so that the sound trigger module continues to send the wake-up event to the audio trigger module.

S21 and S22 have no particular sequence and may be performed sequentially or simultaneously.

S23: The sound trigger module sends a notification for indicating to stop running the breath wake-up model to the audio driver.

After receiving the wake-up event, the sound trigger module may send the notification for indicating to stop running the breath wake-up model to the audio driver.

Because the wake-up event being triggered may be regarded as consuming a wake-up event once, the breath wake-up model may stop running.

S24: The audio driver controls, in response to the notification for indicating to stop running the breath wake-up model, the breath wake-up model in the audio digital signal processor to stop running.

According to S19, the audio digital signal processor may determine that the received data is the data for waking up the voice assistant application and trigger the wake-up event.

To be specific, in the current wake-up event, the voice assistant application can be woken up based on the voice data, and there is no need for the breath wake-up model in the audio digital signal processor to detect again whether the acquired voice data is the data for waking up the voice assistant application.

In this case, after receiving the notification for indicating to stop running the breath wake-up model, the audio driver can control the breath wake-up model in the audio digital signal processor to stop running. In other words, the breath wake-up model does not detect again whether the received data is user wake-up voice, and only needs to continue to receive voice data.

S25: The sound trigger module starts a timer in response to the wake-up event.

After receiving the wake-up event, the sound trigger module may further start a timer, so that the sound trigger module determines whether a notification indicating starting of voice recognition or a notification indicating ending of voice recognition is received within expiration time of the timer.

In other words, the sound trigger module may determine, based on setting time of the timer, whether an audio policy service module is successfully called, to send, when the call is not successful, the notification for indicating to start running the breath wake-up model to the audio driver.

In some embodiments, the expiration time of the timer is 1s to 5s.

For example, the expiration time of the timer is 3s.

S23, S25, and S26 have no particular sequence and may be performed sequentially or simultaneously.

S26: The sound trigger module responses to the wake-up event, and the sound trigger module sends the wake-up event to the audio trigger module.

After receiving the wake-up event, the sound trigger module may further send the wake-up event to the audio trigger module, so that the audio trigger module can control, after receiving the wake-up event, the voice assistant application to start.

S27: The audio trigger module controls, in response to the wake-up event, the voice assistant application to start.

After receiving the wake-up event, the audio trigger module may determine that the voice assistant application needs to be started. In this case, the audio trigger module may control the voice assistant application to start.

S28: Display a user interface after the voice assistant application is started.

After the voice assistant application is started, the electronic device may display the user interface. A specific implementation of the user interface is not limited in this application.

The user interface may be displayed in a partial area of the current interface of the electronic device, or may be a different interface from the current interface of the electronic device.

In some embodiments, the settings interface may include a voice assistant floating action button control. The voice assistant floating action button control is configured to remind the user that the voice assistant application is started and to trigger the voice assistant application to end voice recognition.

A display position, a display style, a display size, and another parameter of the voice assistant floating action button control are not limited in this application.

Therefore, after the electronic device displays the user interface, the user can determine that the voice assistant application is started.

In conclusion, the breath wake-up model in the audio digital signal processor may be in the continuous running state until it is determined that the similarity between the received voice data and the preset wake-up breath data is greater than the first threshold, and the similarity between the received gesture data and the preset wake-up gesture data is greater than the second threshold, and the audio digital signal processor may trigger the wake-up event.

In this case, the audio digital signal processor may start to report the wake-up event step by step, and control the voice assistant application to start by using the audio trigger module, to ensure convenience and timeliness of starting the voice assistant application.

It may be learned that, according to the breath wake-up voice assistant technology, a wake-up word and a trigger button are not required, to simplify a voice interaction step, and quickly start the voice assistant application.

In addition, according to the breath wake-up voice assistant technology, the user can directly approach the electronic device to have a conversation, to improve accuracy of the user interacting with the electronic device, reduce a risk of conversation content leakage in terms of privacy protection, and avoid interference with others.

It should be noted that a survey found that 52% of respondents are concerned about a leakage of private information when using a voice assistant, and 46% of respondents feel annoyed when hearing others using a voice assistant application in public.

### [Recognition phase]

S291: After being started, when successfully calling a sound policy server, the voice assistant application sends a notification for indicating starting of the voice recognition to the sound policy server.

After being started, the voice assistant application may start calling the sound policy server. When the sound policy server is successfully called, a channel between the voice assistant application and the sound policy server may be enabled.

It should be noted that the voice assistant application may call the sound policy server successfully or unsuccessfully. When an audio channel of the sound policy server is occupied, or when the voice assistant exits after being successfully started, the voice assistant application may fail to call the sound policy server.

For example, after the voice assistant application is started, a recording function of the electronic device is enabled, the audio channel of the sound policy server is occupied, and the voice assistant application may not successfully call the sound policy server.

In this case, when successfully calling the sound policy server, the voice assistant application may send the notification for indicating starting of the voice recognition to the sound policy server.

The notification indicating starting of the voice recognition is used for indicating that the voice assistant application can receive the voice data and recognize the voice data.

S292: The sound policy server retrieves the voice data from the audio driver in response to the notification for indicating starting of the voice recognition.

According to S21, it may be determined that the voice data is stored in the buffer of the audio driver. In addition, according to S291, the sound policy server may receive the notification for indicating starting of the voice recognition.

Then, after receiving the notification for indicating starting of the voice recognition, the sound policy server may determine that the voice assistant application can receive the voice data and recognize the voice data. The sound policy server retrieves the voice data from the audio driver, facilitating sending the voice data to the voice assistant application.

In some embodiments, the sound policy server may transfer the voice data from the buffer of the audio driver via a stream of an audio source (audio source) 1999.

S293: The sound policy server sends the voice data to the voice assistant application after retrieving the voice data from the audio driver.

The sound policy server can send the voice data to the voice assistant application after retrieving the audio data from the buffer of the audio driver, so that the voice assistant application recognizes the voice data.

S294: The voice assistant application recognizes the received voice data after receiving the voice data.

When recognizing the received voice data, the voice assistant application recognizes meaning of the voice data, and also converts the voice data into a text.

S295: The sound policy server sends, in response to the notification for indicating starting of the voice recognition, the notification for indicating starting of the voice recognition to the sound trigger module.

After receiving the notification for indicating starting of the voice recognition, the sound policy server may send the notification for indicating starting of the voice recognition to the sound trigger module, to prepare for the sound trigger module to perform a next operation based on the notification for indicating starting of the voice recognition.

S292 and S295 have no particular sequence and may be performed sequentially or simultaneously.

S296: The sound trigger module turns off the timer in response to the notification for indicating starting of the voice recognition.

It may be understood that, when the sound trigger module receives the notification for indicating starting of the voice recognition, it may be determined that the voice assistant application successfully calls the sound policy server.

According to S25, the sound trigger module starts the timer.

Therefore, the sound trigger module may turn off the timer after receiving the notification for indicating starting of the voice recognition, and prepare to start the timer for next wake-up of the voice assistant application.

In addition, turning off the timer can further reduce power consumption of the electronic device.

S297: The sound trigger module sends, in response to the notification for indicating starting of the voice recognition, the notification for indicating to stop running the breath wake-up model to the audio driver.

S297 is an optional step.

In addition, an implementation of S297 is similar to that of S23 in this embodiment shown in FIG. 5A to FIG. 5C. Details are not described here in this application.

It should be understood that in a process of the voice assistant application performing the voice recognition, if the breath wake-up model is run, the wake-up event may be triggered again, causing the current voice recognition to be interrupted.

Therefore, according to S22, the sound trigger module sends the notification for indicating to stop running the breath wake-up model to the audio driver, so that the breath wake-up model may be stopped running. To prevent the breath wake-up model from being started again for another reason after the breath wake-up model is stopped running, the sound trigger module may send the notification for indicating to stop running the breath wake-up model to the audio driver again, to prevent the breath wake-up model from starting running and the wake-up event from being triggered again.

S293 and S296 have no particular sequence and may be performed sequentially or simultaneously.

S298: The audio driver responds to the notification for indicating to stop running the breath wake-up model, and the audio driver controls the breath wake-up model in the audio digital signal processor to stop running.

S298 is an optional step.

An implementation of S298 is similar to that of S24 in this embodiment shown in FIG. 5A to FIG. 5C. Details are not described here in this application.

S299: When determining, based on the voice data, that the voice recognition ends, the voice assistant application sends the notification for indicating ending of the voice recognition to the sound policy server.

The voice assistant application may determine ending of the voice recognition based on the voice data in various manners.

In some embodiments, when the voice assistant application receives an operation by the user to trigger the voice assistant floating action button control based on the voice data in S28, it may be determined that the user wants to end the voice recognition. In this case, the voice assistant application may end the voice recognition in response to the operation on the voice assistant floating action button control.

In some other embodiments, the voice assistant application determines, when determining that a voice text corresponding to the received voice data is a complete word or sentence, that the voice recognition ends.

It is assumed that the voice data is "Have you eaten today".

After receiving "Have you eaten today", the voice assistant application may determine that "Have you eaten today" is a complete sentence, and the voice assistant application may determine that the voice recognition ends.

After receiving "have you", the voice assistant application may determine that "have you" is not a complete sentence, and the voice assistant application may determine that the voice recognition does not end.

Until the voice assistant application receives "eaten today", "have you" and "eaten today" form a complete sentence, and the voice assistant application may determine that the voice recognition ends.

S300: Display a voice recognition result when the voice assistant application determines, based on the voice data, that the voice recognition ends.

The voice recognition result may be text data corresponding to the voice data, or may be an interaction result corresponding to user data.

In some embodiments, the voice assistant application may convert the voice data into a text during recognizing the voice data, to display the text on the user interface in S28.

For example, when the voice data is "Today's weather", after the voice assistant application recognizes "Today's weather", text data corresponding to "Today's weather" may be displayed on the user interface.

In some other embodiments, the voice assistant application may display an interaction result corresponding to the voice data on the user interface in S28 after the voice data recognition ends.

For example, when the voice data is "Today's weather", after recognizing "Today's weather", the voice assistant application may determine that the user wants to know today's weather condition, and may display an actual condition such as a current temperature, a maximum temperature, and a minimum temperature corresponding to today's weather on the user interface.

S301: The sound policy server sends, in response to the notification for indicating ending of the voice recognition, the notification for indicating ending of the voice recognition to the sound trigger module.

After receiving the notification for indicating ending of the voice recognition, the sound policy server may send the notification for indicating ending of the voice recognition to the sound trigger module, to prepare for the sound trigger module to perform a next operation based on the notification for indicating ending of the voice recognition.

S302: The sound trigger module sends, in response to the notification for indicating ending of the voice recognition, the notification for indicating to start running the breath wake-up model to the audio driver.

According to S24, or S22 and S298, it may be determined that the audio driver controls the breath wake-up model in the audio digital signal processor to stop running, and the voice assistant application disables the breath wake-up function.

In this case, to restore the breath wake-up function of the voice assistant application, the sound trigger module may send the notification for indicating to start running the breath wake-up model to the audio driver, so that the sound trigger module controls the breath wake-up model in the audio digital signal processor to start running, therefore, the breath wake-up model in the audio digital signal processor can detect next received data.

S303: The audio driver controls, in response to the notification for indicating to start running the breath wake-up model, the breath wake-up model in the audio digital signal processor to start running.

After receiving the notification for indicating to start running the breath wake-up model, the audio driver may control the breath wake-up model in the audio digital signal processor to start running, to restore the breath function of the voice assistant application, so that the breath wake-up model in the audio digital signal processor can detect the next received data.

S311: When not receiving, at an end of the setting time of the timer, the notification for indicating starting of the voice recognition or the notification for indicating ending of the voice recognition, the sound trigger module sends the notification for indicating to start running the breath wake-up model to the audio driver.

"×" between the voice assistant application and the audio policy service module is used for indicating that the voice assistant application fails to call the audio policy service module.

According to S295, when the voice assistant application successfully calls the audio policy service module, the sound trigger module may receive the notification for indicating starting of the voice recognition.

According to S301, after the voice assistant application successfully calls the audio policy service module, and when the voice assistant application determines that the voice recognition ends, the sound trigger module may receive the notification for indicating ending of the voice recognition.

Then, when the sound trigger module does not receive, at the end of the setting time of the timer, the notification for indicating starting of the voice recognition or the notification for indicating ending of the voice recognition, it may be determined that the sound trigger module fails to call the voice assistant application.

In this case, to restore the breath wake-up function of the voice assistant application, the sound trigger module may send the notification for indicating to start running the breath wake-up model to the audio driver, so that the audio driver controls the breath wake-up model in the audio digital signal processor to start running.

S312: The audio driver controls, in response to the notification for indicating to start running the breath wake-up model, the controlled breath wake-up model in the audio digital signal processor to start running.

An implementation of S312 is similar to that of S303 in this embodiment shown in FIG. 5A to FIG. 5C. Details are not described here in this application.

In conclusion, when the voice assistant application successfully calls the audio policy service module, the sound trigger module may send the notification for stopping running the breath wake-up module to the audio driver, so that the audio driver controls the breath wake-up model to stop running, to prevent the current voice recognition from being interrupted.

In addition, when the voice assistant application determines that the voice recognition ends, the sound trigger module may send the notification for starting running the breath wake-up module to the audio driver, so that the audio driver controls the breath wake-up model to start running, facilitating restoring the breath wake-up function of the voice assistant application.

In addition, when not receiving, at the end of the setting time of the timer, the notification for indicating starting of the voice recognition or the notification for indicating ending of the voice recognition, the sound trigger module may send the notification for starting running the breath wake-up module to the audio driver, so that the audio driver controls the breath wake-up model to start running, facilitating restoring the breath wake-up function of the voice assistant application.

It may be learned that regardless of whether the voice assistant application successfully calls the audio policy service module, the sound trigger module can send the notification for starting running the breath wake-up module to the audio driver, so that the audio driver controls the breath wake-up model to start running, facilitating restoring the breath wake-up function of the voice assistant application.

In other words, the sound trigger module can send the notification for starting running the breath wake-up module to the audio driver at appropriate time, so that the audio driver controls the breath wake-up model to start running. This can prevent the current voice recognition from being interrupted, and also can ensure that the voice assistant application can be woken up normally next time.

In this application, the electronic device enables the breath wake-up function when receiving an operation to enable the breath wake-up function of the voice assistant application, so that the user can wake up the voice assistant in a manner of breath wake-up, thereby improving user experience. After the breath wake-up function of the voice assistant application is enabled, the breath wake-up model may be in the continuously running state on the audio digital signal processor, so that when the received data is the data used for waking up the voice assistant application, the wake-up event may be triggered in time, to enable the voice assistant application to be woken up.

In addition, the breath wake-up module in the audio digital signal processor may trigger the wake-up event when determining that the similarity between the received voice data and the preset breath wake-up data is greater than the first threshold, and the similarity between the received gesture data and the preset wake-up gesture data is greater than the second threshold and report the wake-up event step by step. The sound trigger module controls the voice assistant application to start, to ensure convenience and timeliness of starting the voice assistant application.

In addition, regardless of whether the voice assistant application successfully calls the audio policy service module, the sound trigger module can send the notification for starting running the breath wake-up module to the audio driver, so that the audio driver controls the breath wake-up model to start running, facilitating restoring the breath wake-up function of the voice assistant application.

It may be learned that the method for waking up a voice assistant application through breath in this application is applicable to various target customers, such as a white-collar worker, a public official, and an office worker (accounting for more than 80% of users and covering a wider range of usage scenarios) who use the voice assistant application.

The method for waking up a voice assistant application through breath in this application is applicable to a plurality of typical scenarios, for example, a quiet public place such as a coffee shop, a western restaurant, or a high-speed rail/airport lounge. The user is at a subway station, an airport, a train station, or the like, waiting in line with luggage in hands. The user purchases goods in a supermarket, a shopping mall, and another place, with things holding in hands. The user walks a dog outdoors. When the user drives into/out of a parking lot, a toll booth, a community/park, hands are just freed from a steering wheel of a car.

The method for waking up a voice assistant application through breath in this application is applicable to various requirements. A wake-up word and a trigger button are not required, to simplify a voice interaction step, and quickly start the voice assistant application. In addition, the user can directly approach the electronic device to have a conversation, to improve accuracy of the user interacting with the electronic device, reduce a risk of conversation content leakage in terms of privacy protection, and avoid interference with others.

Based on some of the foregoing embodiments, the following describes the method for waking up an application provided in this application.

For example, this application provides a method for waking up an application.

For ease of description, the method for waking up an application in this application may be performed by the electronic device in FIG. 2.

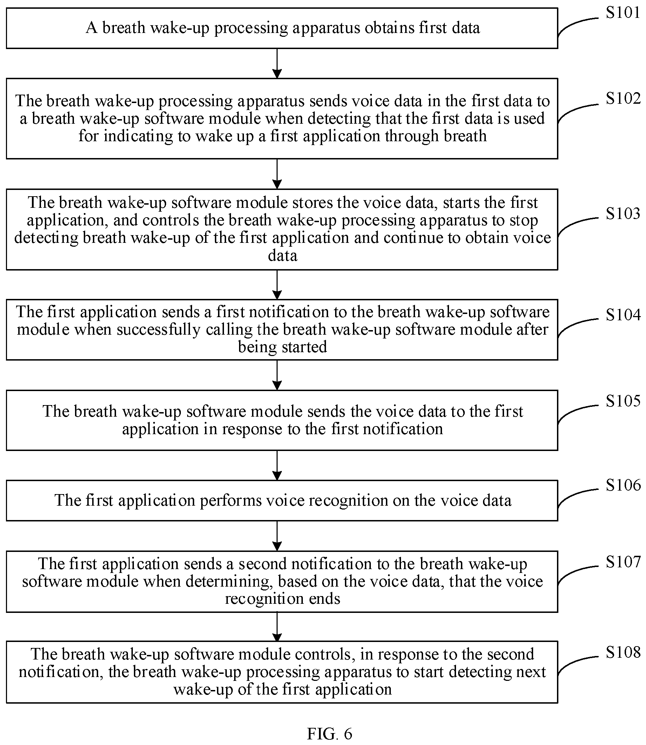

FIG. 6 is a flowchart of a method for waking up an application according to an embodiment of this application.

As shown in FIG. 6, the method for waking up an application provided in this application is applied to an electronic device. The electronic device includes a first application, a breath wake-up software module, and a breath wake-up processing apparatus.

The electronic device may be a mobile phone, a tablet computer, a wearable device, a vehicle-mounted device, a laptop computer, an ultra-mobile personal computer (ultra-mobile personal computer, UMPC), a netbook, a personal digital assistant (personal digital assistant, PDA), a household device, or the like.

The breath wake-up software module may include a first software module, a third software module, a second software module, and a fourth software module.

As shown in FIG. 4, the first software module may be an audio policy service (audio policy service).

The third software module may be a sound trigger module (sound trigger module).

The second software module may be a sound trigger-hal (sound trigger-hal).

The fourth software module may be a sound trigger(sound trigger).

As shown in FIG. 3, a breath wake-up processing apparatus may include an audio digital signal processor (audio digital signal processing, ADSP), a sound acquisition sensor, and an inertial detection sensor.

The sound acquisition sensor may be a microphone.

Specifically, the method for waking up an application provided in this application may include:

S101: The breath wake-up processing apparatus obtains first data.

The first data may be data received by the audio digital signal sensor in S19 in FIG. 5A to FIG. 5C.

For a specific implementation of S101, refer to the descriptions of S17 to S19 in FIG. 5A to FIG. 5C. Details are not described herein again.

S102: The breath wake-up processing apparatus sends voice data in the first data to the breath wake-up software module when detecting that the first data is used for indicating to wake up the first application through breath.

For a specific implementation of S102, refer to the descriptions of S19 and S20 in FIG. 5A to FIG. 5C. Details are not described herein again.

S103: The breath wake-up software module stores the voice data, starts the first application, and controls the breath wake-up processing apparatus to stop detecting breath wake-up of the first application and continue to obtain voice data.

The first application may be a voice assistant application.

For a specific implementation of S103, refer to the descriptions of S21 to S24 in FIG. 5A to FIG. 5C. Details are not described herein again.

S104: The first application sends a first notification to the breath wake-up software module when successfully calling the breath wake-up software module after being started.

For the first notification, refer to the descriptions of the notification for indicating starting of voice recognition in S291 in FIG. 5A to FIG. 5C.

For a specific implementation of S104, refer to the descriptions of S21 to S27 in FIG. 5A to FIG. 5C. Details are not described herein again.

S105: The breath wake-up software module sends the voice data to the first application in response to the first notification.

For a specific implementation of S105, refer to the descriptions of S292 to S295 in FIG. 5A to FIG. 5C. Details are not described herein again.

S106: The first application performs voice recognition on the voice data.

For a specific implementation of S106, refer to the descriptions of S296 in FIG. 5A to FIG. 5C. Details are not described herein again.

S107: The first application sends a second notification to the breath wake-up software module when determining, based on the voice data, that the voice recognition ends.

For the second notification, refer to the descriptions of the notification for indicating ending of voice recognition in S299 in FIG. 5A to FIG. 5C.

For a specific implementation of S107, refer to the descriptions of S299 in FIG. 5A to FIG. 5C. Details are not described herein again.

S108: The breath wake-up software module controls, in response to the second notification, the breath wake-up processing apparatus to start detecting next breath wake-up of the first application.

For a specific implementation of S108, refer to the descriptions of S301 and S302 in FIG. 5A to FIG. 5C. Details are not described herein again.

According to the method for waking up an application in this application, when the breath wake-up processing apparatus detects that the first data is used for indicating to wake up the first application through breath, the breath wake-up software module may start the first application, to ensure convenience and timeliness of starting the first application.

The breath wake-up software module may control, when starting the first application, the breath wake-up processing apparatus to stop detecting the breath wake-up of the first application, so as to prevent current voice recognition from being interrupted.

In addition, the breath wake-up software module may control, when the first application determines that the voice recognition ends, the breath wake-up processing apparatus to start detecting the next breath wake-up of the first application, facilitating restoring a breath wake-up function of the first application.

In some embodiments, the method for waking up an application in this application may further include:

The breath wake-up software module controls, when not receiving the first notification or the second notification after preset duration, the breath wake-up processing apparatus to start detecting the next breath wake-up of the first application.

For a specific implementation of the step, refer to the descriptions of S311 and S312 in FIG. 5A to FIG. 5C. Details are not described herein again.

The breath wake-up software module controls, when not receiving the first notification or the second notification after the preset duration, the breath wake-up processing apparatus to start detecting the next breath wake-up of the first application, facilitating restoring the breath wake-up function of the voice assistant application.

In some embodiments, the method for waking up an application in this application may further include:
displaying a first user interface after the first application program is started; and
displaying, by the first application, a voice recognition result on the first user interface.

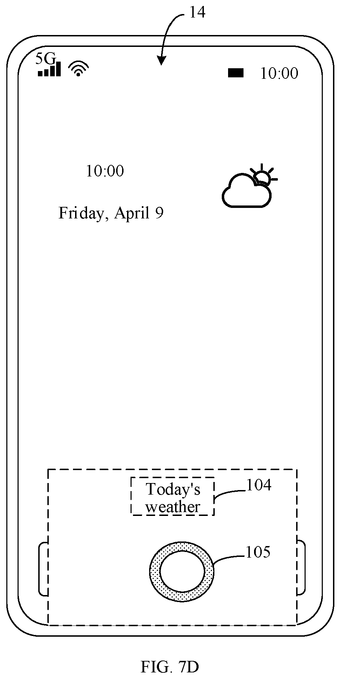

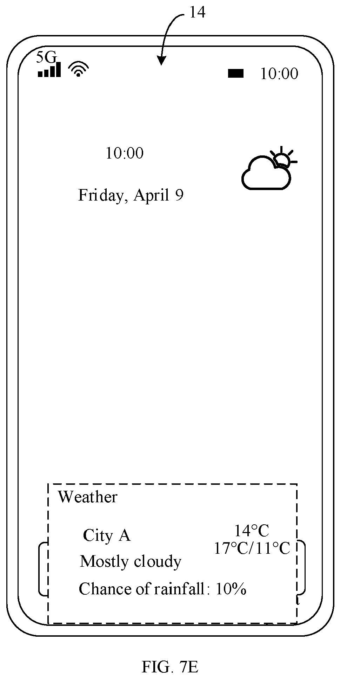

For the first user interface, refer to an interface 14 in FIG. 7D to FIG. 7E, and the descriptions of the user interface in S28 and S300 in FIG. 5A to FIG. 5C.

For a specific implementation of the step, refer to the descriptions of S28 and S300 in FIG. 5A to FIG. 5C. Details are not described herein again.

The voice recognition result may be displayed on the first user interface, so that a user can understand the voice recognition result in time, thereby improving user experience.

In some embodiments, the breath wake-up software module includes: a first software module and a second software module. The voice data is stored in the second software module.

In some embodiments, the method for waking up an application in this application may include:
Step 201: The first application sends the first notification to the first software module when successfully calling the first software module after being started.

For a specific implementation of the step 201, refer to the descriptions of S291 in FIG. 5A to FIG. 5C. Details are not described herein again.

Step 202: The first software module retrieves the voice data from the second software module in response to the first notification, and sends the voice data to the first application.

For a specific implementation of the step 202, refer to the descriptions of S293 to S295 in FIG. 5A to FIG. 5C. Details are not described herein again.

When the first application successfully calls the first software module, the first software module may retrieve the voice data from the second software module and send the voice data to the first application, so that the first application can receive the voice data in time.

In some embodiments, the method for waking up an application in this application may further include:
Step 301: The first software module sends a third notification to the second software module in response to the first notification.

Step 301 may include: The first software module sends the first notification to the third software module in response to the first notification. The third software module sends the third notification to the second software module in response to the first notification.

For the third notification, refer to the descriptions of the notification for indicating to stop running the breath wake-up model in S297 in FIG. 5A to FIG. 5C.

For a specific implementation of the step 301, refer to the descriptions of S295 and S297 in FIG. 5A to FIG. 5C. Details are not described herein again.

Step 302: The second software module controls, in response to the third notification, the breath wake-up processing apparatus to stop detecting the breath wake-up of the first application and continue to obtain voice data.

For a specific implementation of the step 302, refer to the descriptions of S297 and S298 in FIG. 5A to FIG. 5C. Details are not described herein again.

The breath wake-up processing apparatus is controlled to stop detecting the breath wake-up of the first application, so as to prevent the current voice recognition from being interrupted and ensure a quality of the current voice recognition by the first application.

In some embodiments, the method for waking up an application in this application may include:
Step 401: The first software module sends a fourth notification to the second software module in response to the second notification.

Step 401 may include: The first software module sends the second notification to the third software module in response to the second notification, and the third software module sends the fourth notification to the second software module in response to the second notification.

For the fourth notification, refer to the descriptions of the notification for indicating to start running the breath wake-up model in S302 in FIG. 5A to FIG. 5C.

For a specific implementation of the step 401, refer to the descriptions of S301 and S302 in FIG. 5A to FIG. 5C. Details are not described herein again.

Step 402: The second software module controls, in response to the fourth notification, the breath wake-up processing apparatus to start detecting the next breath wake-up of the first application.

For a specific implementation of the step 402, refer to the descriptions of S303 in FIG. 5A to FIG. 5C. Details are not described herein again.

The second software module controls, in response to the fourth notification, the breath wake-up processing apparatus to start detecting the next breath wake-up of the first application, facilitating restoring the breath wake-up function of the first application.

In some embodiments, the breath wake-up software module further includes a third software module and a fourth software module.

In some embodiments, the method for waking up an application in this application may include:
Step 501: The second software module stores the voice data, and sends a wake-up event to the third software module.

For a specific implementation of the step 501, refer to the descriptions of S22 in FIG. 5A to FIG. 5C. Details are not described herein again.

Step 502: The third software module sends the wake-up event to the fourth software module in response to the wake-up event, and sends a fifth notification to the second software module.

For the fifth notification, refer to the descriptions of the notification for indicating to stop running the breath wake-up model in S23 in FIG. 5A to FIG. 5C.

For a specific implementation of the step 502, refer to the descriptions of S23 and S26 in FIG. 5A to FIG. 5C. Details are not described herein again.

Step 503: The fourth software module starts the first application in response to the wake-up event.

For a specific implementation of the step 503, refer to the descriptions of S27 in FIG. 5A to FIG. 5C. Details are not described herein again.

Step 504: The second software module controls, in response to the fifth notification, the breath wake-up processing apparatus to stop detecting the breath wake-up of the first application and continue to obtain voice data.

For a specific implementation of the step 504, refer to the descriptions of S24 in FIG. 5A to FIG. 5C. Details are not described herein again.

It may be learned that the fourth software module may start the first application in response to the wake-up event, to ensure timeliness and accuracy of starting the first application.

In addition, because the wake-up event is triggered, the breath wake-up processing apparatus is controlled to stop detecting the breath wake-up of the first application, so as to prevent the current voice recognition from being interrupted and ensure the quality of the current voice recognition by the first application.

In some embodiments, the method for waking up an application in this application may further include:

Step 601: The third software module sets expiration time in response to the wake-up event, and starts timing based on the expiration time.

For a specific implementation of the step 601, refer to the descriptions of S25 in FIG. 5A to FIG. 5C. Details are not described herein again.

Step 602: The third software module sends a sixth notification to the second software module when determining that the first notification or the second notification is not received when timing of the expiration time ends.

For the sixth notification, refer to the descriptions of the notification for indicating to start running the breath wake-up model in S311 in FIG. 5A to FIG. 5C.

For a specific implementation of the step 602, refer to the descriptions of S311 in FIG. 5A to FIG. 5C. Details are not described herein again.

Step 603: The second software module controls, in response to the sixth notification, the breath wake-up processing apparatus to start detecting the next breath wake-up of the first application.

For a specific implementation of the step 603, refer to the descriptions of S312 in FIG. 5A to FIG. 5C. Details are not described herein again.

Step 604: The third software module disables the timing of the expiration time in response to the first notification.

For a specific implementation of the step 604, refer to the descriptions of S293 in FIG. 5A to FIG. 5C. Details are not described herein again.

A timer may set time to determine whether the first notification or the second notification is received, so that when the first notification or the second notification is not received, the second software module controls the breath wake-up processing apparatus to start detecting the next breath wake-up of the first application to restore the breath wake-up function.

In some embodiments, the method for waking up an application in this application may include:
The first application determines, in response to an operation for indicating to end the voice recognition, that the voice recognition ends.

Alternatively, the first application determines, when determining that a voice text corresponding to the voice data satisfies a preset rule, that the voice recognition ends.

The first application sends the second notification to the first software module when determining that the voice recognition ends.

The preset rule is that the voice text corresponding to the voice data is a complete word or sentence.

For a specific implementation of the step, refer to the descriptions of S299 in FIG. 5A to FIG. 5C. Details are not described herein again.

It may be learned that the first application may determine, in the foregoing two manners, whether the voice recognition ends.

In some embodiments, the breath wake-up processing apparatus includes an inertial detection sensor, a sound acquisition sensor, and an audio digital signal processor.

The first data includes voice data and gesture data.

In some embodiments, the method for waking up an application in this application may include:
Step 701: The inertial detection sensor acquires the gesture data.

Step 702: The inertial detection sensor sends the gesture data to the audio digital signal processor.

For specific implementations of step 701 and step 702, refer to the descriptions of S18 in FIG. 5A to FIG. 5C. Details are not described herein again.

Step 703: The sound acquisition sensor acquires the voice data.

Step 704: The sound acquisition sensor sends the voice data to the audio digital signal processor.

For specific implementations of step 703 and step 704, refer to the descriptions of S17 in FIG. 5A to FIG. 5C. Details are not described herein again.

Step 705: The breath wake-up processing apparatus sends the voice data to the breath wake-up software module when detecting that a similarity between the gesture data and preset wake-up gesture data is greater than a first threshold, and a similarity between the voice data and preset wake-up breath data is greater than a second threshold.

For specific implementations of step 703 and step 704, refer to the descriptions of S19 in FIG. 5A to FIG. 5C. Details are not described herein again.

The inertial detection sensor may acquire the gesture data, and the sound acquisition sensor may acquire the voice data.

The breath wake-up processing apparatus may detect the gesture data acquired by the inertial detection sensor and the voice data acquired by the sound acquisition sensor.

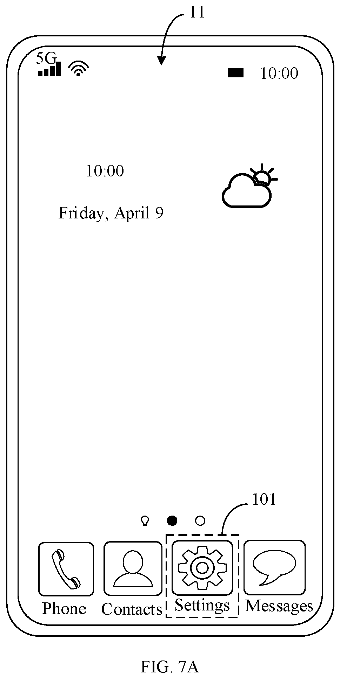

Based on the foregoing descriptions, that the electronic device implements the method for waking up an application in this application is described in detail with reference to FIG. 7A to FIG. 7E. For ease of description, an example in which the electronic device is a mobile phone, and a first application is a voice assistant application is used in FIG. 7A to FIG. 7E.

The mobile phone may display an interface 11 as shown in FIG. 7A. The interface 11 is configured to display icons of various applications (application, APP) installed on the mobile phone. For example, the interface 11 may include a control 101. The control 101 is configured to display an icon of the APP settings.

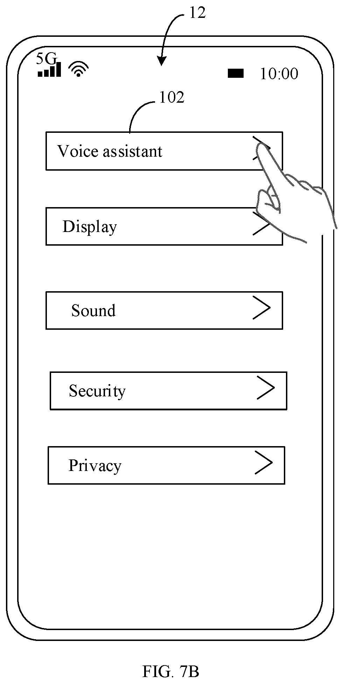

After receiving a trigger operation (such as a click/tapping, double-click/double-tapping, or a long press operation) by the user on the control 101 shown in FIG. 7A, the mobile phone may change from displaying the interface 11 shown in FIG. 7A to displaying an interface 12 shown in FIG. 7B.

The interface 12 may include a control 102. The control 102 is configured to trigger to enter a setting interface of the voice assistant application.

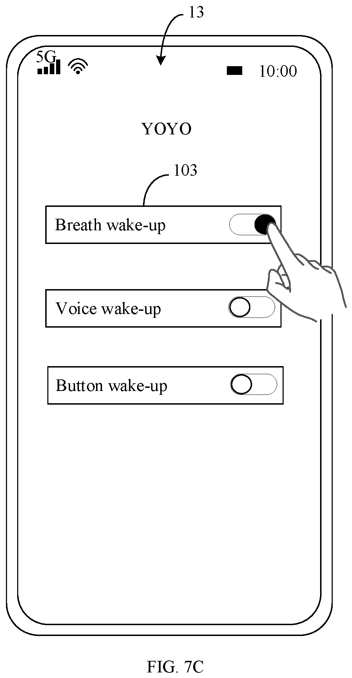

After receiving a trigger operation by the user on the control 102 shown in FIG. 7B, the mobile phone may change from displaying the interface 12 shown in FIG. 7B to displaying an interface 13 shown in FIG. 7C.

The interface 13 may include a control 103. The control 103 is configured to trigger to enable a breath wake-up function of the voice assistant application.

After receiving a trigger operation by the user on the control 103 shown in FIG. 7C, the mobile phone enables the breath wake-up function of the voice assistant application.

In this case, the voice assistant application may notify a breath wake-up software module to start, and the breath wake-up software module may notify a breath wake-up processing apparatus to detect acquired data.

When detecting that the acquired data is data used for waking up the voice assistant application through breath, the breath wake-up processing apparatus sends voice data in the data to the breath wake-up software module.

The breath wake-up software module stores the voice data and controls the voice assistant application to start. After the voice assistant application is started, the mobile phone may display the interface 14 as shown in FIG. 7D.

In addition, the breath wake-up software module may further control the breath wake-up processing apparatus to stop detecting the received data and continue to receive the voice data in the foregoing data.

The interface 14 may include a control 105. The control 105 is configured to remind the user that the voice assistant application is started and to trigger the voice assistant application to end voice recognition.

When the voice assistant application successfully calls the breath wake-up software module after being started, the breath wake-up software module may send the voice data to the voice assistant application.

After receiving the voice data, the voice assistant application may convert the voice data into text data. In this case, the interface 14 may further include a control 104. The control 104 is configured to display the text data corresponding to the voice data.

For example, when the voice data is "Today's weather", the text data displayed in the control 104 is "Today's weather".

It should be understood that when the voice data is "Today's weather", it means that the user wants to know today's weather condition.

After the voice assistant application determines, based on the voice data, that voice recognition ends, the mobile phone may display the interface 14 as shown in FIG. 7D.

In addition, after determining, based on the voice data, that the voice recognition ends, the voice assistant application notifies the breath wake-up software module, and the breath wake-up software module may control the breath wake-up processing apparatus to restart to recognize next received data. In other words, the breath wake-up function of the voice assistant application is restored.

The interface 14 may further include a control 106. The control 106 is configured to display a voice recognition result of the voice assistant application.

For example, when the voice data is "Today's weather", the voice recognition result displayed by the control 106 may be "City A, mostly cloudy, chance of rainfall 10%, current temperature 14°C, maximum temperature 17°C, and minimum temperature 11°C".

In conclusion, the voice assistant application may be woken up in a manner of breath wake-up, and after the voice assistant application determines that the voice recognition ends, the breath wake-up software module may control the breath wake-up processing apparatus to restart to recognize the next received data.

For example, this application provides a document processing apparatus. The apparatus may include one or more modules for performing the method for waking up an application in the foregoing embodiments.

For example, this application provides an electronic device, including a processor. When the processor executes computer code or instructions in a memory, the electronic device is enabled to perform the method for waking up an application in the foregoing embodiments.

For example, this application provides an electronic device, including one or more processors, a memory, and one or more computer programs. The one or more computer programs are stored in the memory. When the computer program is executed by the one or more processors, the electronic device is enabled to perform the method for waking up an application in the foregoing embodiments.

It may be understood that, to implement the foregoing functions, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by hardware or computer software driving hardware depends on particular applications and design constraint conditions of the technical solutions. A person of skill in the art may use different methods to implement the described functions with reference to embodiments for each particular application, but it should not be considered that the implementation goes beyond the scope of this application.

In embodiments, function modules of the electronic device may be divided based on the foregoing method example. For example, each function module may be divided according to each function, or two or more functions may be integrated into one processing module. The integrated module may be implemented in a form of hardware. It should be noted that in this embodiment, the module division is an example, and is merely logical function division, and there may be other division modes during actual implementation.

When function modules are obtained through division by using corresponding functions, the electronic device in the foregoing embodiments may further include: a receiving module and a determining module. The receiving module and the determining module cooperate with each other to support the electronic device to perform the foregoing steps and/or other processes of the technology described in the specification.

It should be noted that all related content of the steps in the foregoing method embodiments may be cited in function description of corresponding functional modules. Details are not described herein again.

The electronic device provided in this embodiment is configured to perform the method for waking up an application, to achieve a same effect as the foregoing method.

For example, this application provides a chip system. The chip system includes a processor, and is configured to invoke a computer program from a memory and run the computer program, to enable an electronic device having the chip system installed to perform the method for waking up an application in the foregoing embodiments.

For example, this application provides a computer-readable storage medium. The computer-readable storage medium stores code or instructions. When the code or the instructions are run on an electronic device, the electronic device is enabled to perform the method for waking up an application in the foregoing embodiments.

For example, this application provides a computer program product. When the computer program product runs on a computer, an electronic device is enabled to perform the method for waking up an application in the foregoing embodiments.

The electronic device, the computer-readable storage medium, the computer program product, or the chip system provided in embodiments may be configured to perform the corresponding method provided above. Therefore, for beneficial effects that can be achieved, refer to the beneficial effects of the corresponding method provided above. Details are not described herein again.

Based on the descriptions of the implementations, a person skilled in the art may understand that for the purpose of convenient and brief descriptions, division into the functional modules is merely used as an example for description. In actual application, the functions can be allocated to different functional modules for implementation based on a requirement. In other words, an inner structure of an apparatus is divided into different functional modules, to implement all or some of the foregoing described functions.

In the several embodiments provided in this application, it should be understood that the disclosed apparatus and method may be implemented in other manners. For example, the described apparatus embodiment is merely an example. For example, the module or the unit division is merely a logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technologies, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, such as a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for waking up an application, applied to an electronic device, wherein the electronic device comprises: a first application, a breath wake-up software module, and a breath wake-up processing apparatus; and
the method comprises:
obtaining, by the breath wake-up processing apparatus, first data;
sending, by the breath wake-up processing apparatus, voice data in the first data to the breath wake-up software module when detecting that the first data is used for indicating to wake up the first application through breath;
storing, by the breath wake-up software module, the voice data, starting the first application, and controlling the breath wake-up processing apparatus to stop detecting breath wake-up of the first application and continue to obtain voice data;
sending, by the first application, a first notification to the breath wake-up software module when successfully calling the breath wake-up software module after being started;
sending, by the breath wake-up software module, the voice data to the first application in response to the first notification;
performing, by the first application, voice recognition on the voice data;
sending, by the first application, a second notification to the breath wake-up software module when determining, based on the voice data, that the voice recognition ends; and
controlling, by the breath wake-up software module in response to the second notification, the breath wake-up processing apparatus to start detecting next breath wake-up of the first application.

2. The method according to claim 1, wherein the method further comprises:
controlling, by the breath wake-up software module when not receiving the first notification or the second notification after preset duration, the breath wake-up processing apparatus to start detecting the next breath wake-up of the first application.

3. The method according to claim 1 or 2, wherein the method further comprises:
displaying a first user interface after the first application program is started; and
displaying, by the first application, a voice recognition result on the first user interface.

4. The method according to any one of claims 1 to 3, wherein the breath wake-up software module comprises: a first software module and a second software module, and the voice data is stored in the second software module;
the sending, by the first application, a first notification to the breath wake-up software module when successfully calling the breath wake-up software module after being started comprises:
sending, by the first application, the first notification to the first software module when successfully calling the first software module after being started; and
the sending, by the breath wake-up software module, the voice data to the first application in response to the first notification comprises:
retrieving, by the first software module, the voice data from the second software module in response to the first notification, and sending the voice data to the first application.

5. The method according to claim 4, wherein the method further comprises:
sending, by the first software module, a third notification to the second software module in response to the first notification; and
controlling, by the second software module in response to the third notification, the breath wake-up processing apparatus to stop detecting the breath wake-up of the first application and continue to obtain voice data.

6. The method according to claim 5, wherein the controlling, by the breath wake-up software module in response to the second notification, the breath wake-up processing apparatus to start detecting next breath wake-up of the first application comprises:
sending, by the first software module, a fourth notification to the second software module in response to the second notification; and
controlling, by the second software module in response to the fourth notification, the breath wake-up processing apparatus to start detecting the next breath wake-up of the first application next time.

7. The method according to claim 5 or 6, wherein the breath wake-up software module further comprises a third software module and a fourth software module; and
storing, by the breath wake-up software module, the voice data, starting the first application, and controlling the breath wake-up processing apparatus to stop the breath wake-up processing apparatus to stop detecting breath wake-up of the first application and continue to obtain voice data comprises:
storing, by the second software module, the voice data, and sending a wake-up event to the third software module;
sending, by the third software module, the wake-up event to the fourth software module in response to the wake-up event, and sending a fifth notification to the second software module;
controlling, by the fourth software module in response to the wake-up event, the first application to start; and
controlling, by the second software module in response to the fifth notification, the breath wake-up processing apparatus to stop detecting the breath wake-up of the first application and continue to obtain voice data.

8. The method according to claim 7, wherein the method further comprises:
setting, by the third software module, expiration time in response to the wake-up event, and starting timing based on the expiration time;
sending, by the third software module, a sixth notification to the second software module when determining that the first notification or the second notification is not received when timing of the expiration time ends;
controlling, by the second software module in response to the sixth notification, the breath wake-up processing apparatus to start detecting the next breath wake-up of the first application; and
disabling, by the third software module, the timing of the expiration time in response to the first notification.

9. The method according to any one of claims 4 to 8, wherein the sending, by the first application, a second notification to the breath wake-up software module when determining, based on the voice data, that the voice recognition ends comprises:
determining, by the first application in response to an operation for indicating to end the voice recognition, that the voice recognition ends; or
determining, by the first application when determining that a voice text corresponding to the voice data satisfies a preset rule, that the voice recognition ends; and
sending, by the first application, the second notification to the first software module when determining that the voice recognition ends.

10. The method according to any one of claims 1 to 9, wherein the breath wake-up processing apparatus comprises: an inertial detection sensor, a sound acquisition sensor, and an audio digital signal processor;
the first data comprises: the voice data and gesture data, and the obtaining, by the breath wake-up processing apparatus, first data comprises:
acquiring, by the inertial detection sensor, the gesture data;
sending, by the inertial detection sensor, the gesture data to the audio digital signal processor;
acquiring, by the sound acquisition sensor, the voice data; and
sending, by the sound acquisition sensor, the voice data to the audio digital signal processor; and
the sending, by the breath wake-up processing apparatus, voice data in the first data to the breath wake-up software module when detecting that the first data is used for indicating to wake up the first application through breath comprises:
sending, by the breath wake-up processing apparatus, the voice data to the breath wake-up software module when detecting that a similarity between the gesture data and preset wake-up gesture data is greater than a first threshold, and a similarity between the voice data and preset wake-up breath data is greater than a second threshold.

11. An electronic device, comprising:
one or more processors,
a memory,
and one or more computer programs, wherein the one or more computer programs are stored in the memory, and the computer program, when executed by the one or more processors, enables the electronic device to perform the method for waking up an application according to any one of claims 1 to 10.

12. A chip system, wherein the chip system comprises a processor, and is configured to invoke a computer program from a memory and run the computer program, to enable an electronic device having the chip system installed to perform the method for waking up an application according to any one of claims 1 to 10.

13. A computer-readable storage medium, comprising a computer program, wherein the computer program, when run on an electronic device, enables the electronic device to perform the method for waking up an application according to any one of claims 1 to 10.
